# EUROPEAN PATENT SPECIFICATION

(11) **EP 0 735 779 B1**
(45) Date of publication and mention of the grant of the patent: **08.09.1999**
(21) Application number: 96104608.3
(22) Date of filing: 22.03.1996
(51) Int. Cl.: H04N 9/64

(54) **Color signal demodulator suitable for PAL and SECAM TV receiver**
Farbsignaldemodulator geeignet für PAL- und SECAM-Fernsehempfänger
Démodulateur de signal couleur applicable pour télévision PAL et SECAM

(30) Priority: 29.03.1995 JP 7198495; 29.03.1995 JP 7198595
(43) Date of publication of application: 02.10.1996
(73) Proprietor: SANYO ELECTRIC Co., Ltd., Moriguchi-shi, Osaka 570 (JP)
(72) Inventor: Osawa, Ikuo, Kiryu-city, Gunma (JP); Ueki, Keijiro, Ohta-city, Gunma (JP)
(74) Representative: Glawe, Delfs, Moll & Partner

(56) References cited:
- ELECTRONIC COMPONENTS & APPLICATIONS, vol. 9, no. 4, 1989, EINDHOVEN (NL), pages 194-195, XP000159333 ECKHARD BRUNS ET AL.: "Analog multi-standard colour decoder ICs TDA4650 and TDA4660"
- STUIVENWOLD A M: "ZERO-PERIPHERAL SECAM DECODER" 1 August 1991 , IEEE TRANSACTIONS ON CONSUMER ELECTRONICS, VOL. 37, NR. 3, PAGE(S) 203 - 209 XP000263186 * the whole document *

## Description

### BACKGROUND OF THE INVENTION

### Field of the Invention

The present invention relates to a color signal demodulator circuit suitable for use in PAL (Phase Alternation by Line) type and SECAM (Sequential Coulours A Memoire) type TV receivers. When such a color signal demodulator is used in PAL type TV receivers, it can accurately perform a function of summing color signals before and after 1H (a horizontal synchronous signal period or a horizontal scan period) to reduce the phase distortion. If such a color signal demodulator is used in the SECAM type TV receivers, it can synthesize discontinuous color signals to provide a color signal with an equalized level.

### Description of the Prior Art

A PAL system is adapted to invert the phase of the R-Y signal for every 1H and to send it with a B-Y signal which has a predetermined phase. Variations in hue caused by phase distortion in a transmission system can be reduced by summing the color signals in adjacent horizontal lines in the TV receiver.

The PAL type color signal demodulator circuit in the prior art performs said summing function for the color signals, including R-Y and B-Y signals, before they have been demodulated. In such cases, a delay glass line was used for the 1H delay. On the other hand, a CCD (Charge Coupled Device) has been recently used as such a circuit for the 1H delay. When a CCD is used, color signals will be delayed by 1H after they have been demodulated.

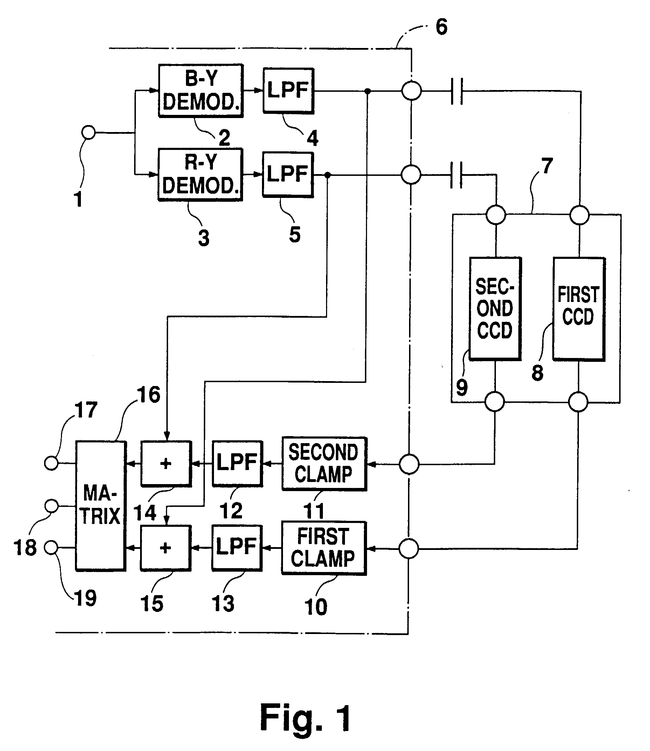

Fig. 1 shows part of a TV receiver which includes such a PAL type color signal demodulator circuit. A chrominance signal is input from input terminal 1 to B-Y and R-Y demodulators 2, 3. The B-Y and R-Y demodulators 2, 3 also receive different carrier waves and demodulate the B-Y and R-Y signals.

The demodulated outputs of the B-Y and R-Y demodulators 2, 3 have their unnecessary components removed by LPFs 4 and 5, respectively and are then output from the IC 6 to CCDIC 7. CCDIC 7 is designed to delay the demodulated color-difference signal by a 1H period and comprises first and second CCD circuits 8, 9 for performing such a delay.

The output signals of the first and second CCD circuits 8, 9 are returned back to IC 6 wherein they are clamped by first and second clamp circuits 10, 11. The output signals of the first and second clamp circuits 10, 11 are passed through LPFs 12 and 13 to remove any unnecessary components resulting from the transfer clocks in the first and second CCD circuits 8, 9 and thereafter applied to first and second adders 14, 15.

On the other hand, the first and second adders 14, 15 also receive the color-difference signals (B-Y and R-Y signals) directly from LPFs 4 and 5, thereby adding the input signal and the 1H delayed signal. Such an addition can reduce the phase distortion created by the transmission system and thereby avoid variations in the color phase.

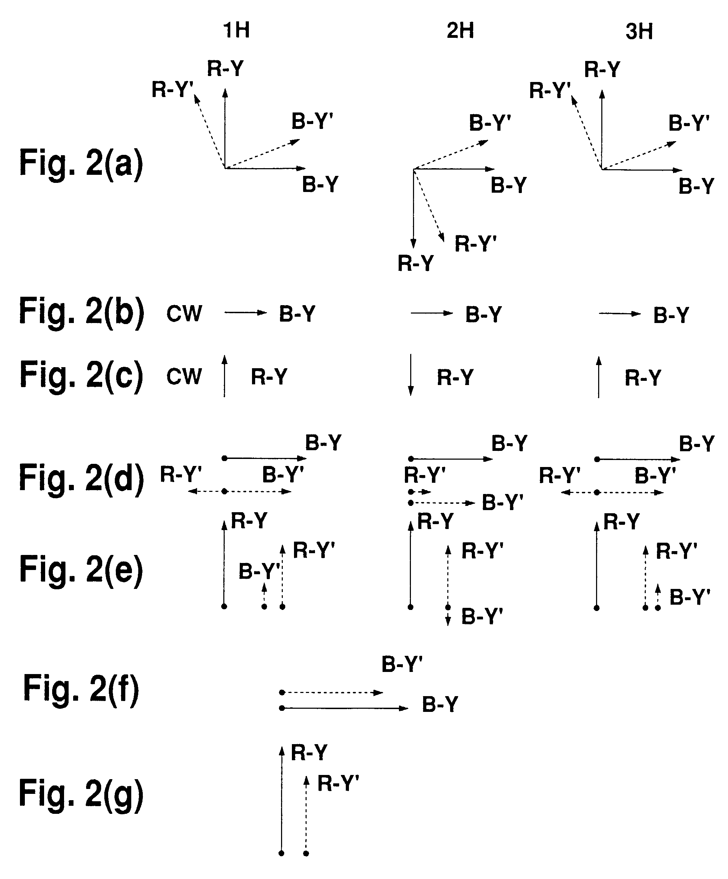

The operation of the color signal demodulator circuit will be described with reference to Figs. 2(a) to 2(g) and particularly to the solid lines therein. If it is now assumed that chrominance signals as shown by solid lines in Fig. 2(a) are input to the system, the phase of the R-Y signal is inverted every 1H, as shown.

The B-Y demodulator 2 of Fig. 1 receives a carrier wave (CW) having a given phase as shown in Fig. 2(b) while the R-Y demodulator 3 receives a carrier wave having its phase inverted every 1H as shown in Fig. 2(c). The B-Y demodulator 2 uses the carrier wave of Fig. 2(b) to demodulate the B-Y signal component of Fig. 2(a). A B-Y as shown in Fig. 2(d) is then output from the B-Y demodulator 2 of Fig. 1. Similarly the R-Y demodulator 3 demodulates the R-Y signal. A similar procedure is performed for 2H (next horizontal period) and 3H (the following horizontal period), resulting in provision of such demodulated outputs as shown in Figs. 2(d) and 2(e).

When the signals, having a 1H difference, shown in Figs. 2(d) and 2(e) are added, it creates a demodulated signal. More particularly, if the signals for 1H and 2H in Fig. 2(d) are summed, a B-Y signal at zero degrees as shown in Fig. 2(f) can be provided since the 1H and 2H signals are at zero degrees. Similarly, if the signals for 1H and 2H in Fig. 2(e) are summed, an R-Y signal at 90 degrees as shown in Fig. 2(g) can be provided since the 1H and 2H signals are at 90 degrees.

The reduction of phase distortion will now be described. Now, assume that the phases of both the B-Y and R-Y signals of Fig. 2(a) are varied counter-clockwise creating vectors as shown by the broken lines. The B-Y demodulator 2 of Fig. 1 uses the carrier wave of Fig. 2(b) to demodulate such a B-Y' signal component as shown in Fig. 2(a) and delivers such a B-Y' signal as shown in Fig. 2(d). At the same time, the carrier wave of Fig. 2(b) will demodulate the B-Y axis component in such an R-Y' signal component as shown in Fig. 2(a) and also demodulate such an R-Y' signal (distortion component) as shown in Fig. 2(d). Similarly, the signal for 2H is also demodulated.

When the signals for 1H and 2H in Fig. 2(d) are summed, a signal as shown in Fig. 2(f) will be provided. In Fig. 2(f), the R-Y signal (distortion component) for 1H is canceled by the R-Y' signal (distortion component) for 2H. Thus, only the B-Y' signal can be detected as the necessary B-Y axis component.

The R-Y demodulator 3 of Fig. 1 uses the carrier wave of Fig. 2(c) to demodulate such an R-Y' signal component as shown in Fig. 2(a) and delivers such an R-Y' signal as shown in Fig. 2(e). At the same time, the carrier wave of Fig. 2(c) will demodulate the R-Y axis component in such a B-Y' signal component as shown in Fig. 2(a) and also demodulate such a B-Y' signal as shown in Fig. 2(e). Similarly, the signal for 2H is also demodulated. When the signals for 1H and 2H in Fig. 2(e) are summed, a signal as shown in Fig. 2(g) is provided. In this case, the B-Y' signal, which is an unnecessary distortion component is canceled.

Thus, the phase distortion created by the transmission system can be reduced to prevent variations in color phase through the addition of the first and second adders 14, 15.

The demodulated R-Y and B-Y signals from the first and second adders 14, 15 are then matrixed by a matrix circuit 16 which in turn delivers R-Y, B-Y and G-Y signals through its output terminals 17 and 19.

In such a manner, the circuit shown in Fig. 1 can demodulate PAL type color signals.

However, the circuit of Fig. 1 raises a problem in that the level will vary between the inputs and outputs of the first and second CCD circuits 8, 9. Thus, distortion components cannot be accurately canceled when the vectors are combined in the first and second adders 14, 15.

In other words, the R-Y' signal vector at zero degrees in Fig. 2(f) will not always be equal to the R-Y' signal vector at 180 degrees from the previous 1H. Even if these signal vectors are summed, a distortion component will remain.

In SECAM, R-Y and B-Y signals are alternately received by the color signal demodulator circuit every 1H. Therefore, 1H delayed signals are necessary to interpolate the B-Y and R-Y signals during the time when no B-Y or R-Y signal respectively is being received by the circuit. The 1H delay circuit is thus used. When the delay circuit is formed by CCD, it raises the problem that attenuation is created by the delay circuit such that a differential level is created between the delayed B-Y and R-Y signals and the original R-Y and B-Y signals.

### SUMMARY OF THE INVENTION

The present invention adds an additional pulse having a given signal level to a demodulated signal at a given location. Level regulating means is adapted to regulate the level of the additional pulse in the delay signal into a level which is same as before the additional pulse was added. If a non-delayed demodulated signal is added to the level regulated delay signal, the level of both the signals is more equal to provide a more accurate output signal.

In a PAL type TV signal, for example, the phase of the R-Y signal (first color-difference signal) is inverted for every horizontal line period (1H). The demodulator means uses a carrier signal which is alternately inverted in phase to demodulate the R-Y signal. On the other hand, the demodulator means uses a carrier signal which always has the same phase to demodulate the B-Y signal. If the phase of the carrier signal is different from that of an input signal, the other (unnecessary) components are respectively superimposed on the demodulated R-Y and B-Y signals due to the differential phase. However, such superimposed unnecessary components are then canceled when the adder means adds the signals delayed by one horizontal line period (1H) to the non-delayed signals.

According to the present invention, thus, the unnecessary components can be reliably removed since the delayed and non-delayed signals are equalized in level.

The SECAM type system contains R-Y and B-Y signals alternated for every one horizontal line period (1H). Thus, the R-Y and B-Y signals are alternately provided to form two different demodulated signals which are in turn used to form two different delay signals (delayed by one horizontal line period (1H)). These delay signals are added to the non-delayed signal to provide the normal R-Y and B-Y signals.

The present invention can equalize the signal level for every horizontal line since the delayed and non-delayed signals are equalized in level.

Particularly, if CCD is utilized as the delay means, the present invention can reliably compensate for attenuation.

If two color-difference signals are delayed, the attenuation due to the delay for each color-difference signal is normally the same. If an additional pulse is added to one of the two color-difference signals to provide a signal corresponding to the attenuation, the two delay signals can be regulated in level by using the level of the additional pulse.

In the PAL system, it is preferable that the additional pulse is set at a given period before the burst gate pulse which is used to gate the color burst signal.

In the SECAM system, it is preferable that the additional pulse is formed based on a sand castle pulse which is formed by superimposing the burst gate pulse on a fly-back pulse. In such a case, it is also preferable that the color burst gate pulse superimposed on the sand castle pulse has a slightly longer length generated with an earlier timing, unlike the conventional burst gate pulse. Thus, the conventional burst gate pulse can be used to stagger the clamp timing in a clamp means for clamping a pedestal level from the additional pulse addition timing.

### BRIEF DESCRIPTION OF THE DRAWINGS

Fig. 1 is a block diagram of a PAL type color signal demodulator circuit according to the prior art.

Figs. 2(a) - 2(g) are vector diagrams illustrating the operation of the color signal demodulator circuit shown in Fig. 1.

Fig. 3 is a block diagram of a color signal demodulator circuit according to the present invention.

Figs. 4(a) - 4(d) show waveforms illustrating the operation of the color signal demodulator circuit shown in Fig. 3.

Figs. 5(a) - 5(c) show waveforms illustrating the operation of the color signal demodulator circuit shown in Fig. 3.

Fig. 6 is a circuit diagram of the detector 32 and comparator 35.

Figs. 7(a) - 7(d) show waveforms illustrating the operation of the color signal demodulator circuit shown in Fig. 3.

Fig. 8 is a circuit diagram of the SCP discriminator 103 shown in Fig. 3.

Figs. 9(a) - 9(e) are vector diagrams for illustrating the operation of the color signal demodulator circuit shown in Fig. 3.

### DETAILED DESCRIPTION OF THE PREFERRED EMBODIMENTS

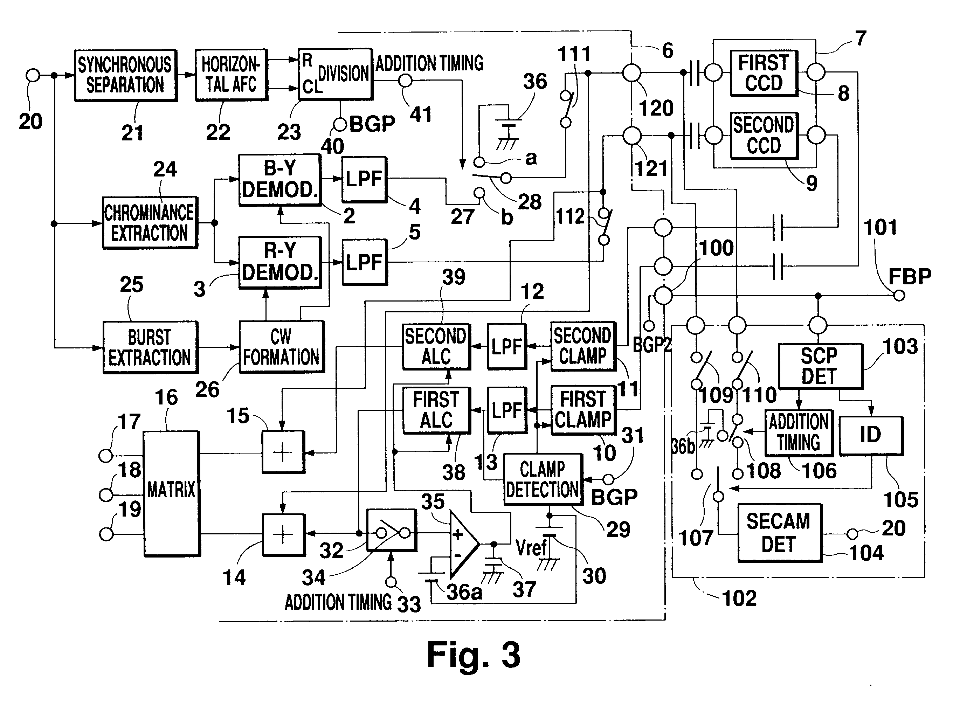

Fig. 3 shows a color signal demodulator circuit according to the present invention, in which reference numeral 20 denotes an input terminal to which a color image signal is applied; 21 a synchronous separation circuit for separating a horizontal synchronous signal; 22 a horizontal AFC (Automated Frequency Control) for generating a horizontal synchronous signal and a divided output having a frequency 32f_{H} (wherein f_{H} is the frequency of a horizontal synchronous signal) which is synchronous with the horizontal synchronous signal; 23 a divider circuit for dividing the 32f_{H} signal into clock signals, the divider being reset by the horizontal synchronous signal to generate a BGP (Burst Gate Pulse) and an addition timing pulse; 24 a chrominance signal extracting circuit; 25 a burst extracting circuit for extracting a burst signal; 26 a carrier wave forming circuit for forming a carrier wave depending on the burst signal; 27 an addition circuit for adding an ALC additional pulse to the output signal of the B-Y demodulator 2 at its given location when a switch 28 is switched to its position a depending on the addition timing pulse, the ALC additional pulse having been set at the constant voltage, 0.2V, in a reference power source 36; 29 a clamp detector circuit for comparing the level of the B-Y signal from the LPF 13 with the reference voltage V_{ref} of the reference power source 30 only for a BGP period from a terminal 31 to generate a detection output used for regulating the level of the BGP period of the B-Y signal to the level of the reference voltage V_{ref}; 32 a sensor circuit responsive to the ALC additional pulse from a terminal 33 for closing a switch 34 to take the ALC additional pulse of 0.2V applied by the addition circuit 27; 35 a comparator for comparing a voltage obtained by adding the reference voltage V_{ref} of the reference power source 30 to the voltage of 0.2V of a reference power source 36a in the addition circuit 27 for returning the ALC additional pulse to its original level of 0.2V; 37 a hold capacitor; 38 and 39 first and second ALC circuits each for varying the level of the B-Y or R-Y signal depending on the held voltage of the capacitor 37; 100 a terminal through which the horizontal synchronous signal, vertical synchronous signal and BGP2 are output from the synchronous separation circuit 21, divider circuit 23 and other circuits; 101 a terminal through which an FBP (Fly-back Pulse) is output and which is adapted to sum the signals from the terminals 100 and 101 for generating an SCP (Sand Castle Pulse) indicative of the timing at which the horizontal synchronous signal, vertical synchronous signal and BGP2 are generated; 102 an IC for generating SECAM type color signals; 103 an SCP discriminating circuit for generating BGP 2 and addition timing pulses depending on SCP; 104 an SECAM demodulator for extracting an SECAM color signal from a TV signal input through the input terminal 20 and for detecting the frequency of a SECAM color signal that has been modulated in frequency; 105 an ID circuit responsive to the frequency of a burst signal during a period in which BGP 2 is applied for generating an ID (Identification) signal indicative of the B-Y or R-Y signals; 106 an addition timing pulse generating circuit for generating an addition timing pulse indicative of the addition timing in the ALC additional pulse; 107 a separation circuit for separating the output signal of the SECAM demodulator 104 into two signals, B-Y and R-Y signals; 108 a switch for adding a constant voltage ALC additional pulse of 0.2V to the B-Y signal from the separation circuit 107 at its given location; 109 and 110 switches that are closed when a SECAM signal is to be reproduced; and 111 and 112 switches that are closed when a PAL signal is to be reproduced.

In Fig. 3, blocks similar to those of Fig. 1 are designated by similar reference numerals and will not be further described.

A PAL type color image signal (TV signal) input through the input terminal 20 contains a chrominance signal which is extracted by the chrominance signal extracting circuit 24. The extracted chrominance signal is then applied to the B-Y and R-Y demodulators 2, 3.

A burst signal (color burst signal) is also extracted from the PAL type color image signal by the burst extracting circuit 25. The extracted burst signal is then applied to the carrier wave forming circuit 26. B-Y and R-Y carrier waves synchronized in phase with a corresponding B-Y or R-Y signal are respectively applied from the carrier wave forming circuit 26 to the B-Y and R-Y demodulators 2, 3 by which B-Y and R-Y signals are demodulated.

A horizontal synchronous signal is also extracted from the PAL type color image signal by the synchronous separation circuit 21, the extracted signal is then applied to the horizontal AFC circuit 22. The horizontal AFC circuit 22 is a PLL (Phase Locked Loop) for locking the horizontal synchronous signal in phase. The phase locked 32f_{H} signal is then applied to the divider circuit 23 as a clock signal while the horizontal synchronous signal is also applied to the same divider circuit 23 as a reset signal. The divider circuit 23 is adapted to generate a logical output of the divided signal in addition to the dividing function. The divider circuit 23 is reset by the horizontal synchronous signal to divide the 32f_{H} signal for forming various signals at a desired timing. In other words, the divider circuit 23 generates a BGP at a terminal 40, which is indicative of the timing at which the burst signal is generated, and an addition timing pulse at a terminal 41, for controlling the addition timing of the ALC additional pulse. The BGP is applied from terminal 40 to terminal 31 while the addition timing pulse is applied from terminal 41 to terminal 33.

The switch 28 of the addition circuit 27 is switched by the addition timing pulse from terminal 41 to add the ALC aadditional pulse of 0.2V of the reference power source 36 to the B-Y signal.

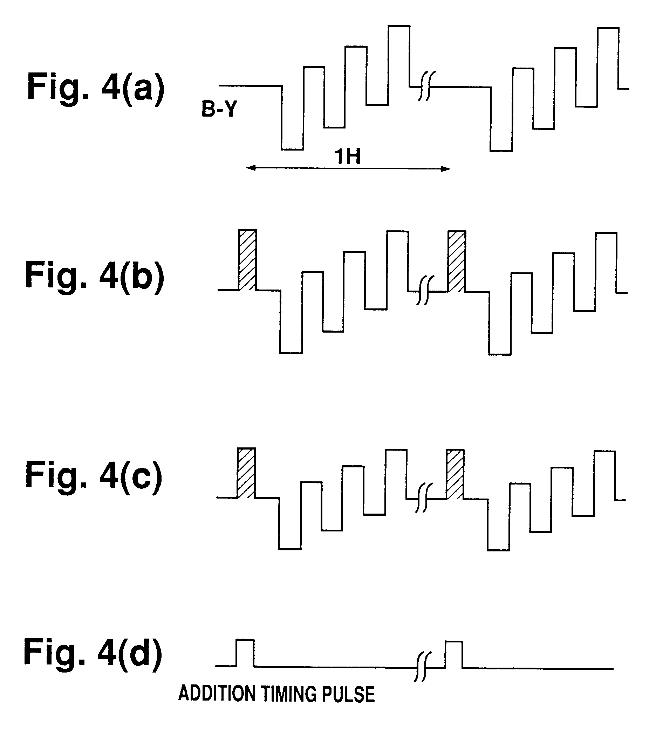

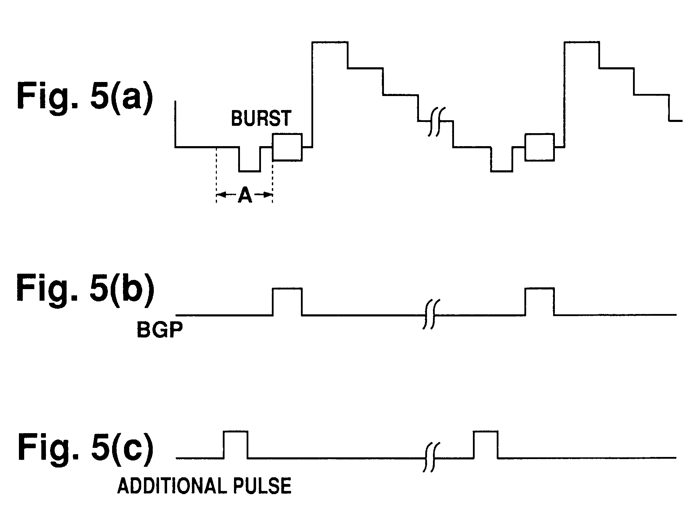

Such a state is shown in and will be described with reference to Figs. 4(a)-(d) and Figs. 5(a)-(c). Fig. 4(a) shows the B-Y signal from the B-Y demodulator 2. Concerning this signal, a signal having the phase shown in Fig. 4(d) is formed as an addition timing pulse. An ALC additional pulse having a constant voltage is added to the signal of Fig. 4(a) in synchronization with the signal of Fig. 4(d) to form such a signal as shown in Fig. 4(b). The hatched portion in the Fig. 4(b) signal is an ALC additional pulse which is always constant irrespective of the content of the image signal. The B-Y signal, including the ALC additional pulse is then applied to the CCD. If the level of the ALC additional pulse is varied, such variation is returned to its original magnitude. As a result, the B-Y signal will also be returned to its original magnitude.

Figs. 5(a)-(c) show a position in which the ALC additional pulse can be generated. Fig. 5(a) shows a video signal (TV signal) while Fig. 5(b) shows the BGP. The ALC additional pulse is generated within a period A shown in Fig. 5(a). Such a period A is from termination of the content of the image signal to initiation of the burst signal in the next 1H. Fig. 5(c) shows the ALC additional pulse within the period A.

The signal in Fig. 4(b) is applied to CCDIC 7. The signal will be attenuated as shown in Fig. 4(c) when it is output from CCDIC 7. The attenuated signal is then applied to the first clamp circuit 10, LPF 13 and first ALC circuit 38.

The R-Y signal will be similarly attenuated since it is transmitted in the same manner as the B-Y signal.

The clamp detector circuit 29 compares the level of the B-Y signal from LPF 13 with the reference voltage V_{ref} of reference power source 30 through a BGP period from the terminal 31 (i.e., a period in which the BGP is at High level) to generate a detection output for regulating the level of the BGP period of the B-Y signal to the level of the reference voltage V_{ref}. Such a detection output is then applied to the first clamp circuit 10. The first clamp circuit 10 thus generates a B-Y signal in which the pedestal level is clamped to the reference voltage V_{ref}. The output of the clamp detector circuit 29 is also applied to the second clamp circuit 11 wherein the pedestal level of the R-Y signal is regulated to the reference voltage V_{ref} similar to the B-Y signal.

The output signal of the first ALC circuit 38 is applied to the sensor circuit 32. The sensor circuit 32 closes the switch 34 depending on the addition timing pulse from terminal 33 to take the ALC additional pulse added by addition circuit 27. The ALC additional pulse was 0.2V when it was added. At this point, however, the level of the ALC additional pulse will have been lowered due to the influence of CCDIC 7 or LPF 12 and 13. The sensor circuit 32 then senses the amount which the ALC additional pulse has lowered from a reference voltage, which is provided by adding the reference voltage V_{ref} of the reference power source 30 to the voltage 0.2V of reference power source 36a of addition circuit 27. The resulting detection signal is supplied to the first and second ALC circuits 38, 39 in which the image signal is returned to its original level. The comparator 35 applies its detection output to the hold capacitor 37, the output voltage of which is in turn used to regulate and increase the output levels of the first and second ALC circuits 38, 39. As a result, the output ends of the first and second ALC circuits 38, 39 will have B-Y and R-Y signals which have had their levels adjusted to be equal to that before input to the CCDIC 7.

The first and second ALC circuits 38, 39 are formed by amplifiers which are controlled in gain by the output voltage of capacitor 37.

Thus, the signals which have their level equalized with before the 1H delay can be applied to the first and second adders 14, 15 which can in turn reduce the phase distortion due to the transmission system and avoid variations in color phase.

The demodulated R-Y and B-Y signals from the first and second adders 14, 15 are matrixed by the matrix circuit 16. The R-Y, B-Y and G-Y signals are thus output from the matrix circuit 16 through the output terminals 17 to 19.

Therefore, the circuit of Fig. 3 can demodulate a PAL type color signal.

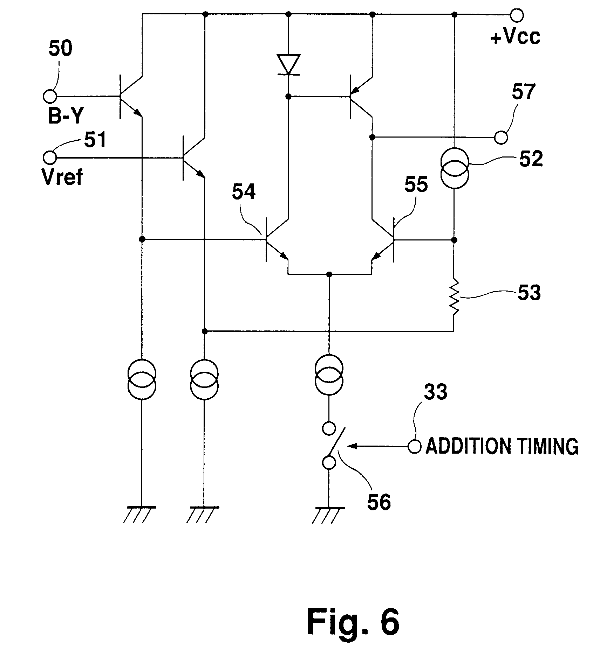

Fig. 6 is a detailed circuit diagram of the sensor 32 and comparator 35 shown in Fig. 3. The B-Y signal is applied to a terminal 50 while the reference voltage V_{ref} of the reference power source 30 is applied to a terminal 51. The value obtained by multiplying the current of a constant-current source 52 by a resistance 53 has been set to be 0.2V. Thus, the comparison between transistors 54 and 55 becomes the comparison between (B-Y signal voltage - 1V_{BE}) and ( V_{ref} - 1V_{BE} + 0.2V) ) which is carried out by the comparator 35. A switch 56 is thus opened or closed depending on the addition timing pulse. The comparison is performed to output the comparison output through an output terminal 57 only when the addition timing pulse is being received by the comparator 35.

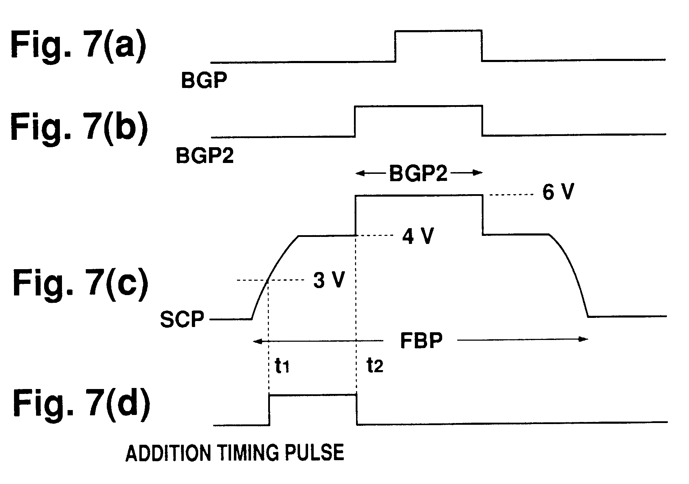

The demodulation of the SECAM type color signal will now be described. On reception of a PAL signal, switches 111 and 112 are closed while switches 109 and 110 are opened. On reception of a SECAM signal, however, switches 111 and 112 are opened while switches 109 and 110 are closed. These switches can be opened or closed, for example, in interlock with a manual change-over switch. An SCP produced at terminal 100 is applied to the SCP discriminating circuit 103. Various waveforms in the SCP discriminating circuit 103 are shown in Fig. 7. The SCP has the waveform shown in Fig. 7(c), which waveform is formed by superimposing BGP2 on FBP. The waveform of FBP is saturated with a voltage of 4V in every horizontal blanking period. The waveform of BGP 2 is saturated with a voltage of 6V. Although the SCP (Fig. 7) contains a vertical synchronous signal of 2V, it will not directly influence the operation of the Fig. 3 circuit.

When SCP of Fig. 7(c) is applied to the SCP discriminating circuit 103, it generates addition timing pulse (Fig. 7(d)) and BGP2 (Fig. 7(b)).

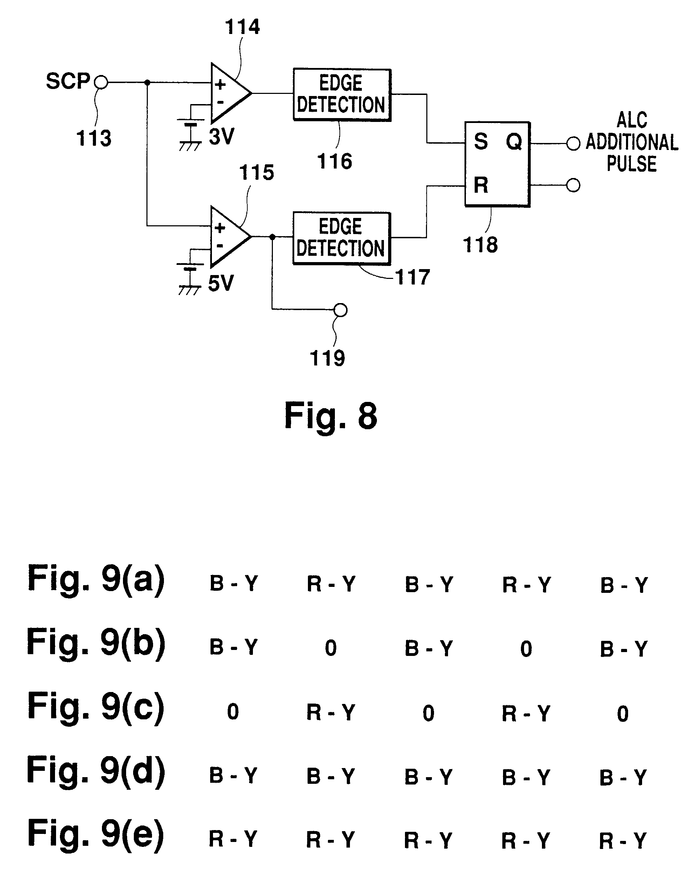

Fig. 8 shows the details of the SCP discriminating circuit 103. The SCP of Fig. 7(c) is applied to an input terminal 113. The reference voltages of first and second comparators 114, 115 are set to be 3V and 5V, respectively. Thus, an "H" level pulse is generated on the output end of the first comparator 114 at a time t1 and on the output end of the comparator 115 at another time t2. The edges of these pulses are detected by edge detecting circuits 116 and 117. Therefore, such an addition timing pulse as shown in Fig. 7(d) is provided on the Q output of R-SFF (R-S flip-flop) 118. Such a BGB2 as shown in Fig. 7(b) is provided on the output terminal 119 of the second comparator 115.

In this embodiment, thus, BGP2 is used in addition to BGP. BGP2 is a signal having its leading edge earlier than that of BGP. Therefore, the timing of Fig. 7(a) is different from that of Fig. 7(b). BGP2 of Fig. 7(b) is also used, for example, to form transfer clocks for the first and second CCD's 8, 9 in the CCDIC 7. The BGP2 is also generated in the divider circuit 23.

The ID circuit 105 detects the frequency of the burst signal in accordance with the BGP 2 signal and identifies whether the currect input chrominance signal is a B-Y or an R-Y signal. The ID circuit 105 controls switching of the separation circuit 107 to output B-Y signals to switch 108 and R-Y signals to switch 109. When a signal as shown in Fig. 9(a) is generated in SECAM demodulator 104, the separation circuit 107 operates to provide a signal as shown in Fig. 9(c) (R-Y signal) to switch 109 and a signal as shown in Fig. 9(b) (B-Y signal) to switch 110 via switch 108.

The ALC additional pulse is added to the B-Y signal at the timing shown in Fig. 7(d) through the ALC additional pulse generating circuit 106 and switch 108. In other words, the B-Y signal is increased by the ALC additional pulse only during the period in which the addition timing pulse is being generated. The details for such an addition are similar to the PAL system. It is performed by switch 108 selecting the reference power source 36b of 0.2V only during the period in which the addition timing pulse is being generated.

Signals from switches 109 and 110 are applied to the CCDIC 7 wherein they are delayed by 1H. These signals are also applied to IC 6 and its first and second adders 14, 15 through terminals 120 and 121. The B-Y signal also passes through the first clamp circuit 10, LPF 13 and first ALC circuit 38 and is returned to its signal level before it was applied to the CCDIC 7 according to the signal level of the ALC additional pulse as in the PAL system. Therefore, the two signal levels applied to the first adder 14, being different from each other by 1H, are equalized. The equalized B-Y signals are alternately applied to the first adder 14 every 1H. The output thereof provides a continuous B-Y signal as shown in Fig. 9(d).

The second adder 15 similarly operates since the output of the comparator 35 is applied to the second ALC circuit 39. The output of the second adder 15 provides a continuous R-Y signal as shown in Fig. 9(e).

In such a manner, the circuit of Fig. 3 can connect SECAM type discontinuous chrominance signals into a continuous signal which is in turn transformed into color signals having their level equalized. Therefore, the CCDIC 7 can be used to compensate for PAL distortion and also to interpolate the SECAM signals. This provides an accurate distortion compensation and an interpolation of signals equalized in level. At this time, the synchronous separation circuit 21, horizontal AFC 22 and divider circuit 23 are also used for PAL and SECAM signals.

In the SECAM system, signal components will not actually be added in the first and second adders 14, 15. Thus, the output level is one-half that of the PAL system. If it is assumed that the input PAL signal has its level equal to 1V, that of the SECAM system should be set to 2V. Thus, the other color signal processing circuits subsequent to the first and second adders 14, 15 can be used for both systems. This can greatly reduce the number of circuit elements.

The present invention can form the ALC additional pulse simply since SCP is used as the SECAM type ALC additional pulse. If there is no SCP, the ALC additional pulse must be formed in a manner similar to the PAL system. This would greatly increase the number of circuit components.

BGP of Fig. 7(a) is produced by divider circuit 23 and can be used to extract the burst signal in both the PAL and SECAM type systems. On the other hand, BGP 2 of Fig. 7(b), output from IC 6, has an earlier leading edge. Thus, the BGP applied to terminal 31 will not be superimposed in timing on the ALC additional pulse. Therefore, the clamp timing in the first and second clamp circuits will not contain any ALC additional pulse.

## Claims

1. A signal processing circuit usable for regulating the levels of delayed signals in a color signal demodulator circuit comprising demodulator means for demodulating first and second input color-difference signals to provide first and second demodulated signals, delay means for delaying said first and second demodulated signals by one horizontal scan period to provide first and second delayed signals and adder means for adding said first and second delayed signals from said first and second delay means to said first and second demodulated signals from said demodulator means, said delayed signals delayed by one horizontal scan period being utilized to reproduce said first and second color-difference signals, the signal processing circuit comprising:
addition means for adding an additional pulse having a given signal level to at least one of said first and second demodulated signals from said demodulator means, said demodulated signal added by said additional pulse being then supplied to said delay means;
level regulating means for regulating the levels of said first and second delayed signals from said delay means to make the signal level of the additional pulse contained in at least one of said first and second delayed signals from said delay means equal to the signal level of said additional pulse when it is added to at least one of said first and second demodulated signals by said addition means;
said adder means being operative to add the first and second delayed signals having their levels regulated by said level regulating means to said first and second demodulated signals from said demodulator means, respectively.

2. A signal processing circuit as defined in claim 1 wherein said delay means uses a charge coupled device (CCD), the delayed signals delayed by said CCD being supplied to said level regulating means.

3. A signal processing circuit as defined in claim 2 wherein said signal processing circuit is disposed in a single semiconductor integrated circuit including said demodulator means and adder means, said delay means being formed as a component outside of said semiconductor integrated circuit.

4. A signal processing circuit as defined in any one of claims 1 to 3 wherein said addition means adds the additional pulse only to one of the first and second color-difference signals and wherein said level regulating means regulates the signal level of the output-delayed signals from said delay means depending on the signal level of the additional pulse in one of said delayed signals.

5. A signal processing circuit as defined in claim 4 wherein said level regulating means comprises:
clamp means for clamping a pedestal level being the signal level of each of said first and second delayed signals in a given non-image signal part on a given clamp level;
comparator means for comparing the level of the additional pulse contained in one of the output signals from said clamp means with the level of a signal obtained by adding said clamp levels to the level of the additional pulse added by said addition means; and
amplifier means for amplifying the rate of amplification in the outputs of said clamp means depending on the comparison output of said comparator means.

6. A signal processing circuit as defined in any one of claims 1 to 5 wherein the input signals are PAL type TV signals and wherein said demodulator means parallelly demodulates the first and second color-difference signals and said adder means adds the first color-difference signals in two adjacent horizontal scan periods to each other and also adds the second color-difference signals in two adjacent horizontal scan periods to each other.

7. A signal processing circuit as defined in claim 6 wherein said addition means adds the additional pulse during a period from termination of an image signal in one horizontal scan period for TV signals to initiation of a color burst signal in the next horizontal scan period.

8. A signal processing circuit as defined in claim 7 wherein said addition means is responsive to a color burst gate pulse indicative of a period during which the color burst signal is generated for generating an earlier timing pulse, advanced by a given period, thereby adding said additional pulse based on said timing pulse.

9. A signal processing circuit as defined in any one of claims 1 to 5 wherein the input signals are SECAM type TV signals and wherein said demodulator means comprises a SECAM demodulator unit for alternately demodulating first and second color-difference signals alternately contained in said TV signals for every horizontal scan period, thereby providing a signal containing the first and second color-difference signals for every horizontal period and a separation unit for switching the outputs of said SECAM demodulator unit to the respective path for every horizontal period, thereby generating first and second demodulated signals each only containing the first or second color-difference signal.

10. A signal processing circuit as defined in claim 9 wherein said addition means adds the additional pulse based on a timing pulse which is responsive to a sand castle pulse formed by superimposing a second color burst gate signal and a fly-back pulse, wherein said second color burst gate signal has signal initiation timing which is advanced by a given period from a first color burst gate signal which is indicative of the period during which the color burst signal in the TV signals, and signal termination timing which is the same as that of said first color burst gate signal.

11. A signal processing circuit as defined in claim 10 wherein said addition means is operative to compare the sand castle pulse with a first reference voltage for initiating the generation of said timing pulse and to compare said sand castle pulse with a second reference voltage for terminating the generation of said timing pulse, thereby generating a timing pulse which terminates at the initiation of said second color burst signal.

12. A signal processing circuit as defined in any one of claims 1 to 5 wherein the input signal is a PAL or SECAM type TV signal and wherein said demodulator means comprises PAL demodulator means for demodulating first and second color-difference signals contained in the PAL type input signal to provide first and second PAL demodulated signals and SECAM demodulator means for alternately demodulating first and second color-difference signals alternately contained in the SECAM type input signal, the first and second demodulated color-difference signals being sequentially and separately switched and output to generate first and second SECAM demodulated signals each only containing the first or second color-difference signal, said addition means separately comprising PAL addition means and SECAM addition means, said PAL addition means being operative to generate an additional pulse based on a first color burst gate pulse indicative of the period during which the color burst signal is generated, said SECAM addition means being operative to generate an additional pulse based on a sand castle pulse formed by superimposing a second color burst gate pulse on a fly-back pulse, said delay and level regulating means being operative to process the first and second PAL or SECAM demodulated signals.

## Patentansprüche

1. Signalverarbeitungsschaltung für die Regulierung der Pegel verzögerter Signale in einer Farbsignal-Demodulator-schaltung, mit Demodulatormitteln zum Demodulieren erster und zweiter Farbdifferenz-Eingangssignale zum Schaffen erster und zweiter demodulierter Signale, Verzögerungsmitteln zum Verzögern der ersten und zweiten demodulierten Signale um eine horizontale Abtastperiode zum Schaffen erster und zweiter verzögerter Signale und Addiermitteln zum Addieren der ersten und zweiten verzögerten Signale der ersten und zweiten Verzögerungsmittel zu den ersten und zweiten demodulierten Signalen von den Demodulatormitteln, wobei die verzögerten Signale, die um eine horizontale Abtastperiode verzögert sind dazu verwendet werden, die ersten und zweiten Farbdifferenzsignale wiederzugeben, wobei die Signalverarbeitungsschaltung aufweist:
Additionsmittel zum Addieren eines zusätzlichen Impulses mit einem gegebenen Signalpegel zu wenigstens einem der ersten und zweiten demodulierten Signale von den Demodulatormitteln, wobei das demodulierte Signal, welchem der zusätzliche Impuls addiert ist, dann den Verzögerungsmitteln zugeführt wird;
Pegelreguliermitteln zum Regulieren der Pegel der ersten und zweiten verzögerten Signale von den Verzögerungsmitteln, um den Signalpegel des zusätzlichen Impulses, der in wenigstens einem der ersten und zweiten verzögerten Signale von den Verzögerungsmitteln enthalten ist, gleich dem Signalpegel des zusätzlichen Impulses zu machen, wenn dieser wenigstens zu einem der ersten und zweiten demodulierten Signale durch die Additionsmittel addiert ist;
wobei die Addiermittel so arbeiten, daß die ersten und zweiten verzögerten Signale, deren Pegel durch die Pegelreguliermittel reguliert sind, jeweils den ersten und zweiten demodulierten Signalen von den Demodulatormitteln addiert sind.

2. Signalverarbeitungsschaltung nach Anspruch 1, wobei die Verzögerungsmittel eine ladungsgekoppelte Vorrichtung (CCD) aufweisen, wobei die durch diese CCD-verzögerten Signale den Pegelreguliermitteln zugeführt werden.

3. Signalverarbeitungsschaltung nach Anspruch 2, wobei die Signalverarbeitungsschaltung in einer einzelnen integrierten Halbleiterschaltung angeordnet ist, welche die Demodulatormittel und Addiermittel enthält, wobei die Verzögerungsmittel als eine Komponente außerhalb der integrierten Halbleiterschaltung ausgebildet sind.

4. Signalverarbeitungsschaltung nach einem der Ansprüche 1 - 3, wobei die Additionsmittel den zusätzlichen Impuls nur zu einem der ersten und zweiten Farbdifferenzsignale addieren, und wobei die Pegelreguliermittel den Signalpegel der verzögerten Ausgangssignale von den Verzögerungsmitteln in Abhängigkeit von dem Signalpegel des zusätzlichen Impulses in einem der verzögerten Signale regulieren.

5. Signalverarbeitungsschaltung nach Anspruch 4, wobei die Pegelreguliermittel aufweisen:
Klemm-Mittel zum Klemmen eines Sockelpegels, der der Signalpegel jedes der ersten und zweiten verzögerten Signale in einem gegebenen Nichtbild-Signalteil ist, an einen gegebenen Klemmpegel;
Komparatormittel zum Vergleichen des Pegels des zusätzlichen Impulses, der in einem der Ausgangssignale von den Klemm-Mitteln enthalten ist, mit dem Pegel eines Signals, das durch Addieren des Klemmpegels zu dem Pegel des zusätzlichen Impulses erhalten wird, welcher durch die Additionsmittel addiert wird; und
Verstärkermittel zum Verstärken der Verstärkungsrate in den Ausgängen der Klemm-Mittel in Abhängigkeit von dem Vergleichsausgang der Komparatormittel.

6. Signalverarbeitungsschaltung nach einem der Ansprüche 1 - 5, wobei die Eingangssignale TV-Signale vom PAL-Typ sind und wobei die Demodulatormittel die ersten und zweiten Farbdifferenzsignale demodulieren und die Addiermittel die ersten Farbdifferenzsignale in zwei benachbarten horizontalen Abtastperioden zueinander addieren und auch die zweiten Farbdifferenzsignale in zwei benachbarten horizontalen Abtastperioden zueinander addieren.

7. Signalverarbeitungsschaltung nach Anspruch 6, wobei die Additionsmittel den zusätzlichen Impuls während einer Periode von der Beendigung eines Bildsignals in einer horizontalen Abtastperiode für TV-Signale bis zur Initiation eines Farb-Burst-Signals in der nächsten horizonalen Abtastperiode addieren.

8. Signalverarbeitungsschaltung nach Anspruch 7, wobei die Additionsmittel auf einen Farb-Burst-Gate-Impuls antworten, der eine Periode anzeigt, während der das Farb-Burst-Signal erzeugt wird, um einen früheren Zeitschaltimpuls zu erzeugen, der um eine vorgegebene Periode vorläuft, wodurch der zusätzliche Impuls basierend auf diesem Zeitschaltimpuls addiert wird.

9. Signalverarbeitungsschaltung nach einem der Ansprüche 1 - 5, wobei die Eingangssignale TV-Signale vom SECAM-Typ sind, und wobei die Demodulatormittel eine SECAM-Demodulatoreinheit zum alternierenden Demodulieren erster und zweiter Farbdifferenzsignale aufweist, die abwechselnd in den TV-Signalen für jede horizontale Abtastperiode enthalten sind, wodurch ein Signal erzeugt wird, welches die ersten und zweiten Farbdifferenzsignale für jede horizontale Periode enthält, und eine Trenneinheit zum Schalten der Ausgänge der SECAM-Demodulatoreinheit auf den entsprechenden Pfad für jede horizontale Periode aufweist, wodurch erste und zweite demodulierte Signale erzeugt werden, von denen jedes nur das erste oder zweite Farbdifferenzsignal enthält.

10. Signalverarbeitungsschaltung nach Anspruch 9, wobei die Additionsmittel den zusätzlichen Impuls basierend auf einen Zeitschaltimpuls addieren, der auf einen "Sandburg"-Impuls (sand castle pulse) antwortet, welcher durch Überlagern eines zweiten Farb-Burst-Gate-Signals und eines Rücklaufimpulses gebildet ist, wobei das zweite Farb-Burst-Gate-Signal einen Signalauslösezeitpunkt hat, der gegenüber einem ersten Farb-Burst-Gate-Signal verläuft, die die Periode anzeigt, während welcher das Farb-Burst-Signal in den TV-Signalen ist, und die Signalbeendigungszeitsschaltung, die die gleiche wie jene für das erste Farb-Burst-Gate-Signal ist.

11. Signalverarbeitungsschaltung nach Anspruch 10, wobei die Additionsmittel so arbeiten, daß sie den "Sandburg"-Im-puls mit einer ersten Referenzspannung vergleichen, um das Erzeugen des Zeitschaltimpulses auszulösen und den "Sandburg"-Impuls mit einer zweiten Referenzspannung vergleichen, um die Erzeugung des Zeitschaltimpulses zu beenden, wodurch ein Zeitschaltimpuls erzeugt wird, der bei der Auslösung des zweiten Farb-Burst-Signals endet.

12. Signalverarbeitungsschaltung nach einem der Ansprüche 1 - 5, wobei das Eingangssignal ein TV-Signal vom PAL- oder SECAM-Typ ist, und wobei die Demodulatormittel PAL-Demodulatormittel zum Demodulieren erster und zweiter Farbdifferenzsignale, die in dem PAL-Eingangssignal enthalten sind, um erste und zweite demodulierte PAL-Signale zu erzeugen und SECAM-Demodulatormittel aufweisen zum alternierenden Demodulieren erster und zweiter Farbdifferenzsignale, die alternierend in dem SECAM-Eingangssignal enthalten sind, wobei die ersten und zweiten demodulierten Farbdifferenzsignale sequentiell und getrennt geschaltet und ausgegeben werden, um erste und zweite demodulierte SECAM-Signale zu erzeugen, die jedes nur das erste oder zweite Farbdifferenzsignal enthalten, wobei die Additionsmittel getrennt PAL-Additionsmittel und SECAM-Additionsmittel aufweisen, wobei die PAL-Additionsmittel so betrieben werden, daß sie einen zusätzlichen Impuls basierend auf einem ersten Farb-Burst-Gate-Impuls erzeugen, der die Periode, während welcher das Farb-Burst-Signal erzeugt wird, anzeigt, die SECAM-Additionsmittel so arbeiten, daß sie einen zusätzlichen Impuls, basierend auf einem "Sandburg"-Impuls, der durch Überlageren eines zweiten Farb-Burst-Gate-Impulses mit einem Rücklaufimpuls gebildet ist, erzeugen, wobei die Verzögerungs- und Pegelreguliermittel so arbeiten, daß die ersten und zweiten demodulierten PAL- oder SECAM-Signale verarbeitet werden.

## Revendications

1. Circuit de traitement de signaux, utilisable pour assurer la régulation des niveaux de signaux retardés dans un circuit démodulateur de signaux d'image en couleur, comprenant des moyens démodulateurs, servant à démoduler des premier et second signaux de chrominance d'entrée de façon à fournir des premier et second signaux démodulés, des moyens de retard, servant à retarder les premier et second signaux démodulés d'une période de balayage ligne de façon à fournir des premier et second signaux retardés, et des moyens additionneurs, servant à ajouter les premier et second signaux retardés provenant des premier et second moyens de retard aux premier et second signaux démodulés provenant des moyens démodulateurs, les signaux retardés d'une période de balayage ligne étant utilisés pour reproduire les premier et second signaux de chrominance, le circuit de traitement de signaux comprenant :
des moyens d'addition servant à ajouter une impulsion additionnelle ayant un niveau de signal donné à au moins l'un des premier et second signaux démodulés provenant des moyens démodulateurs, ledit signal démodulé auquel l'impulsion additionnelle est ajoutée étant alors envoyé aux moyens de retard ;
des moyens de régulation de niveau servant à assurer la régulation des niveaux des premier et second signaux retardés provenant des moyens de retard, de façon à rendre le niveau de signal de l'impulsion additionnelle contenue dans au moins l'un des premier et second signaux retardés provenant des moyens de retard égal au niveau de signal de l'impulsion additionnelle lorsqu'elle est ajoutée à au moins l'un des premier et second signaux démodulés par les moyens d'addition ;
les moyens additionneurs servant à ajouter les premier et second signaux retardés, dont la régulation des niveaux est assurée par les moyens de régulation de niveau, respectivement aux premier et second signaux démodulés provenant des moyens démodulateurs.

2. Circuit de traitement de signaux tel que défini à la revendication 1, dans lequel les moyens de retard utilisent un dispositif à couplage de charge (CCD), les signaux retardés par ledit CCD étant envoyés aux moyens de régulation de niveau.

3. Circuit de traitement de signaux tel que défini à la revendication 2, dans lequel le circuit de traitement de signaux est disposé dans un circuit intégré à semi-conducteur unique comprenant les moyens démodulateurs et moyens additionneurs, les moyens de retard étant réalisés sous forme d'un composant extérieur au circuit intégré à semi-conducteur.

4. Circuit de traitement de signaux tel que défini dans l'une quelconque des revendications 1 à 3, dans lequel les moyens d'addition ajoutent l'impulsion additionnelle uniquement à l'un des premier et second signaux de chrominance et dans lequel les moyens de régulation de niveau assurent la régulation du niveau de signal des signaux retardés de sortie provenant des moyens de retard, en fonction du niveau de signal de l'impulsion additionnelle dans l'un des signaux retardés.

5. Circuit de traitement de signaux tel que défini à la revendication 4, dans lequel les moyens de régulation de niveau comprennent :
des moyens de blocage servant à bloquer un niveau de suppression qui est le niveau de signal de chacun des premier et second signaux retardés dans une partie donnée de signal n'appartenant pas à l'image sur un niveau de blocage donné ;
des moyens comparateurs servant à comparer le niveau de l'impulsion additionnelle contenue dans l'un des signaux de sortie provenant des moyens de blocage au niveau d'un signal obtenu en ajoutant les niveaux de blocage au niveau de l'impulsion additionnelle ajoutée par les moyens d'addition ; et
des moyens amplificateurs servant à amplifier le taux d'amplification dans les sorties des moyens de blocage en fonction de la sortie de comparaison des moyens comparateurs.

6. Circuit de traitement de signaux tel que défini dans l'une quelconque des revendications 1 à 5, dans lequel les signaux d'entrée sont des signaux de télévision de type PAL et dans lequel les moyens démodulateurs démodulent en parallèle les premier et second signaux de chrominance et les moyens additionneurs ajoutent l'un à l'autre les premiers signaux de chrominance dans deux périodes de balayage ligne adjacentes et ajoutent aussi l'un à l'autre les seconds signaux de chrominance dans deux périodes de balayage ligne adjacentes.

7. Circuit de traitement de signaux tel que défini à la revendication 6, dans lequel les moyens d'addition ajoutent l'impulsion additionnelle pendant une période s'étendant de la fin d'un signal d'image dans une première période de balayage ligne pour des signaux de télévision au début d'une salve de signaux de couleur dans la période suivante de balayage ligne.

8. Circuit de traitement de signaux tel que défini à la revendication 7, dans lequel les moyens d'addition réagissant à une impulsion de déclenchement de salve de signaux couleur indiquant une période pendant laquelle la salve de signaux couleur est produite pour produire une impulsion de synchronisation antérieure, avancée d'une période donnée, ajoutant ainsi l'impulsion additionnelle sur la base de l'impulsion de synchronisation.

9. Circuit de traitement de signaux tel que défini à l'une quelconque des revendications 1 à 5, dans lequel les signaux d'entrée sont des signaux de télévision du type SECAM et dans lequel les moyens démodulateurs comprennent une unité démodulatrice SECAM, servant à démoduler d'une manière alternée des premier et second signaux de chrominance contenus d'une manière alternée dans les signaux de télévision pour chaque période de balayage ligne, fournissant ainsi un signal contenant les premier et second signaux de chrominance pour chaque période de ligne, et une unité de séparation servant à commuter les sorties de l'unité démodulatrice SECAM sur leur chemin respectif pour chaque période de ligne, produisant ainsi des premier et second signaux démodulés ne contenant chacun que le premier ou le second signal de chrominance.

10. Circuit de traitement de signaux tel que défini à la revendication 9, dans lequel les moyens d'addition ajoutent l'impulsion additionnelle sur la base d'une impulsion de synchronisation qui réagit à une impulsion de château de sable formée en superposant une seconde salve de signaux de couleur et une impulsion de retour de balayage horizontal, dans lequel la seconde salve de signaux de couleur présente une synchronisation de début de signal qui est avancée d'une période donnée par rapport à une première salve de signaux de couleur qui indique la période pendant laquelle la salve de signaux de couleur dans les signaux de télévision, et une synchronisation de fin de signal qui est la même que celle de la première salve de signaux de couleur.

11. Circuit de traitement de signaux tel que défini à la revendication 10, dans lequel les moyens d'addition servent à comparer l'impulsion de château de sable à une première tension de référence pour faire débuter la production de ladite impulsion de synchronisation et à comparer l'impulsion de château de sable à une seconde tension de référence pour faire finir la production de ladite impulsion de synchronisation, produisant ainsi une impulsion de synchronisation qui finit au début de la seconde salve de signaux de couleur.

12. Circuit de traitement de signaux tel que défini à l'une quelconque des revendications 1 à 5, dans lequel le signal d'entrée est un signal de télévision du type PAL ou SECAM et dans lequel les moyens démodulateurs comprennent des moyens démodulateurs PAL, servant à démoduler des premier et second signaux de chrominance contenus dans le signal d'entrée de type PAL afin de fournir des premier et second signaux démodulés PAL, et des moyens démodulateurs SECAM servant à démoduler d'une manière alternée des premier et second signaux de chrominance contenus d'une manière alternée dans le signal d'entrée de type SECAM, les premier et second signaux de chrominance démodulés étant, d'une manière séquentielle et séparée, commutés et délivrés en sortie pour produire des premier et second signaux démodulés SECAM, ne contenant chacun que le premier ou le second signal de chrominance, les moyens d'addition comprenant séparément des moyens d'addition PAL et des moyens d'addition SECAM, les moyens d'addition PAL servant à produire une impulsion additionnelle sur la base d'une première impulsion de déclenchement de salve de signaux de couleur indiquant la période pendant laquelle la salve de signaux de couleur est produite, les moyens d'addition SECAM servant à produire une impulsion additionnelle sur la base d'une impulsion de château de sable formée en superposant une seconde impulsion de déclenchement de salve de signaux de couleur sur une impulsion de retour de balayage horizontal, les moyens de retard et de régulation de niveau servant à traiter les premier et second signaux démodulés PAL ou SECAM.
